# EUROPÄISCHE PATENTSCHRIFT

(11) **EP 1 730 612 B1**
(45) Veröffentlichungstag und Bekanntmachung des Hinweises auf die Patenterteilung: **02.12.2009**
(21) Anmeldenummer: 04725045.1
(22) Anmeldetag: 01.04.2004
(51) Int. Cl.: G05B 19/418

(54) **VERFAHREN ZUR FESTSTELLUNG VON INKOMPATIBILITÄTEN IN EINEM BUSSYSTEM MIT MEHREREN STEURGERÄTEN**
METHOD FOR IDENTIFYING INCOMPATIBILITIES IN A BUS SYSTEM COMPRISING SEVERAL CONTROL DEVICES
PROCEDE POUR L'IDENTIFICATION D'INCOMPATIBILITES DANS UN SYSTEME DE BUS COMPORTANT PLUSIEURS DISPOSITIFS DE COMMANDE

(43) Veröffentlichungstag der Anmeldung: 13.12.2006
(73) Patentinhaber: Bayerische Motoren Werke Aktiengesellschaft, 80809 München (DE)
(72) Erfinder: BEHR, Matthias, 85391 Allershausen (DE)
(74) Vertreter: Grüter, Klaus Peter
(86) Internationale Anmeldenummer: PCT/EP2004/003589
(87) Internationale Veröffentlichungsnummer: WO 2005/106605

(56) Entgegenhaltungen:
- US-A- 5 579 511
- US-A1- 2002 184 410

## Beschreibung

Die Erfindung betrifft insbesondere ein Verfahren zur Feststellung von Inkompatibilitäten in einem Bussystem eines Kraftfahrzeugs, das mehrere Steuergeräte aufweist, nach dem Oberbegriff des Anspruchs 1.

Inkompatibilitäten können durch den Einbau von Steuergeräten unterschiedlicher Entwicklungsstände entstehen, insbesondere bei unfachgemäßer Reparatur des Fahrzeugs. Inkompatibilitäten können die Funktionstüchtigkeit des Fahrzeugs beeinträchtigen. Problematisch ist, dass sie möglicherweise nicht offensichtlich sind und in kaum voraussehbarer Weise zu Fehlern führen.

Die US 5,579511 A1 beschreibt ein Verfahren zur Feststellung von Inkompatibilitäten in einem System verbundener elektronischer Geräte mit Hilfe eines Computers.

Aufgabe der Erfindung ist insbesondere die Schaffung eines Verfahrens, um Inkompatibilitäten in einem Bussystem mit mehreren Steuergeräten in einem Kraftfahrzeug weitgehend zuverlässig feststellen zu können.

Diese Aufgabe wird durch ein Verfahren nach Patentanspruch 1 gelöst. Vorteilhafte Ausgestaltungen der Erfindung sind Gegenstand der abhängigen Patentansprüche.

Ein wesentlicher Aspekt des erfindungsgemäßen Verfahrens zur Feststellung von Inkompatibilitäten in einem Bussystem mit mehreren Steuergeräten, besteht in der Vornahme der folgenden Verfahrensschritte.

In einem ersten und in einem zweiten Steuergerät wird eine den Typ des betreffenden Steuergeräts identifizierende Steuergerät-Identifikations-Information bzw. ein Identifier gespeichert. Die Steuergerät-Identifikations-Information bzw. der Identifier erlaubt insbesondere einen Rückschluss auf die von dem betreffenden Steuergerät ausgeführten Funktionsabläufe und/oder auf die Hardware-Version des betreffenden Steuergeräts.

In dem ersten und in dem zweiten Steuergerät wird ferner eine die Ablaufsteuerung des betreffenden Steuergeräts identifizierende Versions-Information, insbesondere eine Versionsnummer, gespeichert.

Die Versions-Information erlaubt insbesondere einen Rückschluss auf die von dem betreffenden Steuergerät ausgeführten Funktionsabläufe und/oder auf die Aktualität der Ablaufsteuerung und/oder auf die Hardware-Version des betreffenden Steuergeräts.

Das erste Steuergerät übermittelt an das zweite Steuergerät seine erste Steuergerät-Identifikations-Information und/oder seine erste Versions-Information.

Das zweite Steuergerät greift auf eine Kompatibilitäts-Referenz-Tabelle zu, die vorzugsweise in dem zweiten Steuergerät gespeichert ist. Die Kompatibilitäts-Referenz-Tabelle gibt an, welche Kombinationen aus Steuergerät-Identifikations-Information und Versions-Information und damit welche Steuergeräte und deren betreffende Ablaufsteuerungen, mit dem zweiten Steuergerät in kompatibler bzw. getesteter Weise kommunizieren werden.

Jedes Steuergerät vergleicht die von einem oder mehreren anderen Steuergeräten übermittelten Steuergerät-Identifikations-Informationen und/oder Versions-Informationen mit der ihm zugeordneten Kompatibilitäts-Referenz-Tabelle bzw. mit deren Einträgen.

Unter einem Steuergerät wird erfindungsgemäß insbesondere ein physikalisches Steuergerät verstanden, das ein oder mehrere Software-Module aufweist. Jedes Software-Modul führt mindestens eine Funktion aus. Mit anderen Worten ausgedrückt, bildet dann jedes physikalische Steuergerät ein oder mehrere virtuelle Steuergeräte. Bei bisher eher üblichen Steuergeräten führt jedes Steuergerät nur eine einzige Funktion aus. So gibt es bspw. getrennte physikalische Steuergeräte für die Motorsteuerung und für das Energiemanagement eines Fahrzeugs. Insbesondere handelt es sich bei einem Steuergerät der Erfindung um eine Vorrichtung mit mindestens einem DatenProzessor und mindestens einem flüchtigen Speicher, wobei der Prozessor bzw. die Prozessoren die ein oder mehreren Software-Module ausführt.

Bei einer Ausgestaltung des erfindungsgemäßen Verfahrens ist vorgesehen, dass umgekehrt auch das zweite Steuergerät an das erste Steuergerät seine Steuergerät-Identifikations-Information und seine Versions-Information übermittelt.

Zusammenfassend erlaubt dieses Verfahren das dezentrale Erkennen von Inkompatibilitäten beim Einsatz mehrerer Steuergeräte in einem Kommunikationsnetzwerk bzw. in einem Bussystem eines Kraftfahrzeugs. Es wird nicht nur eine Überprüfung der Kompatibilität zwischen je zwei Steuergeräten durchgeführt, sondern jedes Steuergerät prüft die Kompatibilität zu dem jeweils anderen Steuergerät. Bevor eine Kommunikationsverbindung zwischen zwei Steuergeräten hergestellt wird, werden bevorzugt also jeweils zwei unabhängige Prüfungen auf Kompatibilität vorgenommen, was die Zuverlässigkeit eines Bussystems, das das erfindungsgemäße Verfahren verwendet, deutlich erhöht. Fehlfunktionen, insbesondere in sicherheitskritischen Bereichen, können vermieden werden. Die erfindungsgemäße dezentrale Lösung kommt ohne zusätzliches Steuergerät aus. Lediglich die Buslast und der Speicherbedarf erhöhen sich geringfügig.

Bei einer Ausführungsform der Erfindung ist vorgesehen, dass das eine Steuergerät an das andere Steuergerät seine Steuergerät-Identifikations-Information und seine Versions-Information auf die Aufforderung des anderen Steuergeräts hin übermittelt.

Hierdurch ist es möglich, die Überprüfung auf Kompatibilität bedarfsweise und zu einem geeigneten Zeitpunkt vorzunehmen, z.B. im "Leerlauf" des abfragenden bzw. auffordernden Steuergeräts.

Bei einer Ausgestaltung der Erfindung übermittelt das erste Steuergerät seine Steuergerät-Identifikations-Information und/oder seine Versions-Information aufgefordert oder unaufgefordert an weitgehend sämtliche anderen Steuergeräte im Bussystem zur Prüfung der Kompatibilität.

Bei einer Ausführungsform der Erfindung wird die Übermittlung periodisch und/oder auf Anforderung anderer Steuergeräte hin und/oder bei niedriger Buslast und/oder vor der Inbetriebnahme des Kraftfahrzeugs vorgenommen.

Durch die Übermittlung bzw. den "broadcast" der Informationen hin zu sämtlichen anderen Steuergeräte, insbesondere während einer geringen Auslastung des Busses, ist eine schnelle Kompatibilitätsprüfung und eine Ermittlung der nicht kompatiblen Steuergeräte aus der Vielzahl der am Bus befindlichen Steuergeräte möglich.

Bei einer weiteren, nicht beanspruchten Ausführungsform der Erfindung wird lediglich die Versions-Information des betreffenden Steuergeräts übermittelt, wenn lediglich eine logische Schnittstelle zwischen den Steuergeräten gegeben ist. Dies ist der Fall, wenn mehrere Steuergeräte bzw. deren Ablaufsteuerungen auf derselben Hardware laufen.

Die Kompatibilitäts-Referenz-Tabelle ist vorzugsweise im Speicher des jeweiligen Steuergeräts gespeichert bzw. abgelegt.

Bei einer Ausführungsform der Erfindung vergleicht jedes Steuergerät die empfangene Versions-Information mit den Einträgen der Kompatibilitäts-Referenz-Tabelle und kommuniziert (lediglich) bei einer Übereinstimmung mit dem sendenden Steuergerät in kompatibler Weise.

Das empfangende Steuergerät ermittelt also anhand der empfangenen Steuergerät-Identifikations-Informationen, ob für das sendende Steuergerät ein Eintrag in der Kompatibilitäts-Referenz-Tabelle, die insbesondere im empfangenden Steuergerät gespeichert ist, vorliegt und gegebenenfalls, welche Versions-Informationen unter dem Eintrag verzeichnet sind. Im nächsten Schritt werden die empfangenen Versions-Informationen mit den unter dem Eintrag verzeichneten Versions-Informationen zur Überprüfung auf Übereinstimmung verglichen.

Stimmen zwar die empfangenen Versions-Informationen nicht mit den unter dem Eintrag verzeichneten Versions-Informationen überein, weil die Versions-Informationen in Form einer Versionsnummer höher und/oder aktueller als die verzeichneten Versions-Informationen sind bzw. die verzeichnete Versionsnummer ist, so ist bei einem Ausführungsbeispiel der Erfindung vorgesehen, dass das empfangende Steuergerät auch dann mit dem sendenden Steuergerät kommuniziert, wenn die Versionsnummer höher und/oder aktueller als die in der Kompatibilitäts-Referenz-Tabelle eingetragene Versionsnummer ist.

Bei einem Ausführungsbeispiel der Erfindung ist vorgesehen, dass bei einem negativen Vergleich das betreffende empfangende Steuergerät und/oder das betreffende sendende Steuergerät eine Fehlermeldung generiert und/oder den Dienst verweigert und/oder nur noch einen eingeschränkten Betrieb bzw. einen Notbetrieb ausführt.

Die Erfindung ermöglicht ferner ein vorteilhaftes Bussystem mit mehreren Steuergeräten, das Inkompatibilitäten unter den Steuergeräten feststellt, indem es ein erfindungsgemäßes Verfahren ausführt. Ebenso ermöglicht die Erfindung ein Computer-Programm-Produkt zur Feststellung von Inkompatibilitäten in einem Bussystem mit mehreren Steuergeräten, das in einem Kraftfahrzeug angeordnet ist, indem es die Ausführung eines erfindungsgemäßen Verfahrens veranlasst.

## Patentansprüche

1. Verfahren zur Feststellung von Inkompatibilitäten in einem Bussystem eines Kraftfahrzeugs, das mehrere Steuergeräte aufweist, **dadurch gekennzeichnet, dass**
- in einem ersten und in einem zweiten Steuergerät eine den Typ des betreffenden Steuergeräts identifizierende Steuergerät-Identifikations-Information bzw. ein Identifier gespeichert wird, die insbesondere einen Rückschluss auf die von dem betreffenden Steuergerät ausgeführten Funktionsabläufe und/oder auf die Hardware-Version des betreffenden Steuergeräts erlaubt,
- in dem ersten und in dem zweiten Steuergerät eine die Ablaufsteuerung des betreffenden Steuergeräts identifizierende Versions-Information, insbesondere eine Versionsnummer, gespeichert wird, die insbesondere einen Rückschluss auf die von dem betreffenden Steuergerät ausgeführten Funktionsabläufe und/oder auf die Aktualität der Ablaufsteuerung und/oder auf die Hardware-Version des betreffenden Steuergeräts erlaubt,
- das erste Steuergerät an das zweite Steuergerät seine erste Steuergerät-Identifikations-Information und seine erste Versions-Information übermittelt,
- das zweite Steuergerät auf eine Kompatibilitäts-Referenz-Tabelle zugreift, die vorzugsweise in dem zweiten Steuergerät gespeichert ist, die Kompatibilitäts-Referenz-Tabelle angibt, welche Kombinationen aus Steuergerät-Identifikations-Information und Versions-Information und damit welche Steuergeräte und deren betreffende Ablaufsteuerungen, mit dem zweiten Steuergerät in kompatibler Weise kommunizieren werden, und
- dass jedes Steuergerät die von einem oder mehreren anderen Steuergeräten übermittelten Steuergerät-Identfikations-Informationen und Versions-Informationen empfängt und mit der ihm zugeordneten Kompatibilitäts-Referenz-Tabelle bzw. mit deren Einträgen vergleicht.

2. Verfahren nach Anspruch 1, **dadurch gekennzeichnet, dass** umgekehrt auch das zweite Steuergerät an das erste Steuergerät seine zweite Steuergerät-Identifikations-Information und seine zweite Versions-Information übermittelt.

3. Verfahren nach Anspruch 1 oder 2, **dadurch gekennzeichnet, dass** das eine Steuergerät an das andere Steuergerät seine Steuergerät-Identifikations-Information und seine Versions-Information auf die Aufforderung des anderen Steuergeräts hin übermittelt.

4. Verfahren nach einem der vorstehenden Ansprüche, **dadurch gekennzeichnet, dass** das erste Steuergerät seine Steuergerät-Identifikations-Information und seine Versions-Information aufgefordert oder unaufgefordert an weitgehend sämtliche anderen Steuergeräte im Bussystem zur Prüfung der Kompatibilität übermittelt.

5. Verfahren nach Anspruch 4, **dadurch gekennzeichnet, dass** die Übermittlung periodisch und/oder auf Anforderung anderer Steuergeräte und/oder bei niedriger Buslast und/oder vor der Inbetriebnahme des Kraftfahrzeugs vorgenommen wird.

6. Verfahren nach Anspruch 1, **dadurch gekennzeichnet, dass** jedes Steuergerät die empfangene Versions-Information mit den Einträgen der Kompatibilitäts-Referenz-Tabelle vergleicht und bei einer Übereinstimmung mit dem sendenden Steuergerät in kompatibler Weise kommuniziert.

7. Verfahren nach Anspruch 6, **dadurch gekennzeichnet, dass** die Versions-Information eine Versionsnummer ist und das empfangende Steuergerät auch dann mit dem sendenden Steuergerät kommuniziert, wenn die Versionsnummer höher als die in der Kompatibilitäts-Referenz-Tabelle eingetragene Versionsnummer ist.

8. Verfahren nach Anspruch 1 oder 7, **dadurch gekennzeichnet, dass** bei einem negativen Vergleich das betreffende empfangende Steuergerät und/oder das betreffende sendende Steuergerät eine Fehlermeldung generiert und/oder den Dienst verweigert und/oder nur noch einen eingeschränkten Betrieb bzw. einen Notbetrieb ausführt.

9. Bussystem mit mehreren Steuergeräten, das Inkompatibilitäten unter den Steuergeräten feststellt, indem es ein Verfahren nach einem der vorstehenden Verfahrensansprüche ausführt.

10. Computer-Programm-Produkt zur Feststellung von Inkompatibilitäten in einem Bussystem mit mehreren Steuergeräten, das in einem Kraftfahrzeug angeordnet ist, **dadurch gekennzeichnet, dass** es die Ausführung eines Verfahrens nach einem oder mehreren der vorstehenden Verfahrensansprüchen veranlasst.

## Claims

1. A method for identifying incompatibilities in a bus system of a motor vehicle comprising a plurality of control devices, **characterised in that**
- control device identification information or an identifier identifying the type of the relevant control device is stored in a first and in a second control device and, more especially, allows a conclusion about the operating sequences carried out by the relevant control device and/or about the hardware version of the relevant control device,
- version information, more especially a version number, identifying the sequence control of the relevant control device is stored in the first and in the second control device, and, more especially, allows a conclusion about the operating sequences carried out by the relevant control device and/or about the current status of the sequence control and/or on the hardware version of the relevant control device,
- the first control device transmits its first control device identification information and its first version information to the second control device,
- the second control device accesses a compatibility reference table, which is preferably stored in the second control device, the compatibility reference table indicates which combinations of control device identification information and version information and thus which control devices and their relevant sequence controls will communicate with the second control device in a compatible manner, and
- **in that** each control device receives the control device identification information and version information transmitted by one or more other control devices and compares it with the compatibility reference table associated with it or with its entries.

2. A method according to claim 1, **characterised in that**, conversely, the second control device also transmits its second control device identification information and its second version information to the first control device.

3. A method according to claim 1 or 2, **characterised in that** one control device transmits its control device identification information and its version information to the other control device on the request of the other control device.

4. A method according to any one of the preceding claims, **characterised in that** the first control device transmits its control device identification information and its version information, on request or unrequested, to substantially all the other control devices in the bus system to check the compatibility.

5. A method according to claim 4, **characterised in that** the transmission is carried out periodically and/or on the request of other control devices and/or when there is a low bus load and/or before the motor vehicle is started.

6. A method according to claim 1, **characterised in that** each control device compares the received version information with the entries of the compatibility reference table and when there is a conformity, communicates with the transmitting control device in a compatible manner.

7. A method according to claim 6, **characterised in that** the version information is a version number and the receiving control device also communicates with the transmitting control device when the version number is higher than the version number entered in the compatibility reference table.

8. A method according to claim 1 or 7, **characterised in that** in the event of a negative comparison, the relevant receiving control device and/or the relevant transmitting control device generates a fault report and/or refuses the service and/or only carries out a restricted operation or an emergency operation.

9. A bus system with a plurality of control devices, which identifies incompatibilities among the control devices, in that it carries out a method according to any one of the preceding method claims.

10. A computer programme product for identifying incompatibilities in a bus system with a plurality of control devices, which is arranged in a motor vehicle, **characterised in that** it initiates the implementation of a method according to any one or more of the preceding method claims.

## Revendications

1. Procédé pour l'identification d'incompatibilités dans un système de bus d'un véhicule comprenant plusieurs appareils de commande,
**caractérisé en ce que**
- dans un premier et dans un second appareil de commande, on enregistre une information d'identification d'appareil de commande ou un identificateur identifiant le type de l'appareil de commande concerné et permettant en particulier de déduire le déroulement de la fonction exécutée par l'appareil de commande concerné et/ou la version hardware de l'appareil de commande concerné,
- on enregistre dans le premier et dans le second appareil de commande une information de version identifiant la commande de déroulement de l'appareil de commande concerné, en particulier un numéro de version qui permet en particulier de déduire le déroulement de fonction exécutée par l'appareil de commande concerné et/ou l'actualité de la commande de déroulement et/ou la version hardware de l'appareil de commande concerné,
- le premier appareil de commande transmet au second appareil de commande sa première information d'identification d'appareil de commande et sa première information de version,
- le second appareil de commande accède à une table de référence de compatibilité qui est de préférence enregistrée dans ce second appareil de commande,
- la table de référence de compatibilité indique quelles combinaisons d'information d'identification d'appareil de commande et d'information de version et par suite quels appareils de commande et leurs commandes de déroulement concernées sont en communication avec le second appareil de commande, de manière compatible, et
- chaque appareil de commande reçoit des informations de version et des informations d'identification d'appareil de commande transmises par un ou plusieurs autre(s) appareil(s) de commande et les compare avec la table de référence de compatibilité qui lui est associée ou avec les données enregistrées dans cette table.

2. Procédé selon la revendication 1,
**caractérisé en ce qu'**
inversement, le second appareil de commande transmet également au premier appareil de commande sa seconde information d'identification d'appareil de commande et sa seconde information de version.

3. Procédé selon la revendication 1 ou 2,
**caractérisé en ce qu'**
un appareil de commande transmet à l'autre appareil de commande son information d'identification d'appareil de commande et son information de version à la demande de l'autre appareil de commande.

4. Procédé selon l'une des revendications précédentes,
**caractérisé en ce que**
le premier appareil de commande, transmet son information d'identification d'appareil de commande et son information de version, que ces informations soient demandées ou non, à essentiellement tous les autres appareils de commande dans le système des bus pour vérifier la compatibilité.

5. Procédé selon la revendication 4,
**caractérisé en ce que**
la transmission est effectuée périodiquement et/ou à la demande d'autres appareils de commande et/ou en présence d'une faible charge de bus et/ou avant la mise en route du véhicule.

6. Procédé selon la revendication 1,
**caractérisé en ce que**
chaque appareil de commande compare l'information de version reçue avec les informations enregistrées dans la table de référence de compatibilité, et en cas de concordance, communique avec l'appareil de commande émetteur de manière compatible.

7. Procédé selon la revendication 6,
**caractérisé en ce que**
l'information de version est un numéro de version et l'appareil de commande récepteur communique également avec l'appareil de commande émetteur lorsque le numéro de version est supérieur au numéro de version enregistré dans la table de référence de compatibilité.

8. Procédé selon la revendication 1 ou 7,
**caractérisé en ce qu'**
en présence d'une comparaison négative, l'appareil de commande récepteur concerné et/ou l'appareil de commande émetteur concerné, génère(nt) un message d'erreur, et/ou refusent la fonction et/ou n'exécutent qu'une fonction limitée ou une fonction d'urgence.

9. Système de bus avec plusieurs appareils de commande qui identifie des incompatibilités entre les appareils de commande en mettant en oeuvre un procédé selon l'une des revendications précédentes.

10. Produit programme d'ordinateur pour identifer des incompatibilités dans un système de bus avec plusieurs appareils de commande, qui est monté dans un véhicule,
**caractérisé en ce qu'**
il permet la mise en oeuvre d'un procédé selon une ou plusieurs des revendications 1 à 8.
